# EUROPÄISCHE PATENTSCHRIFT

(11) **EP 0 767 345 B1**
(45) Veröffentlichungstag und Bekanntmachung des Hinweises auf die Patenterteilung: **11.06.2003**
(21) Anmeldenummer: 96810596.5
(22) Anmeldetag: 09.09.1996
(51) Int. Cl.: F23R 3/40, F02C 3/28, F23C 6/04

(54) **Verfahren zum Betrieb einer Kraftwerksanlage**
Process for operating a power plant
Procédé de fonctionnement d'une centrale d'énergie

(30) Priorität: 02.10.1995 DE 19536836
(43) Veröffentlichungstag der Anmeldung: 09.04.1997
(73) Patentinhaber: ALSTOM (Switzerland) Ltd, 5401 Baden (CH)
(72) Erfinder: Joos, Franz, Dr., 79809 Weilheim-Bannholz (DE); Griffin, Timothy, Dr., 5408 Ennetbaden (CH); Koch, Hans, 8008 Zürich (CH)

(56) Entgegenhaltungen:
- US-A- 3 731 495
- US-A- 4 224 045
- US-A- 5 048 284
- US-A- 5 235 804
- US-A- 5 395 235

## Beschreibung

### Technisches Gebiet

Die vorliegende Erfindung betrifft ein Verfahren zum Betrieb einer Kraftwerksanlage gemäss Oberbegriff des Anspruchs 1.

### Stand der Technik

Bei Brennkammern von Kraftwerksanlagen mit einem breiten Lastbereich stellt sich immer wieder das Problem, wie die Verbrennung bei einem hohen Wirkungsgrad schadstoffarm betrieben werden kann. Dabei stehen zwar mehrheitlich die NOx-Emissionen im Vordergrunde, indessen hat es sich gezeigt, dass auch die UHC- (= unverbrannte Kohlen-Wasser-Stoffe) und die CO-Emissionen in Zukunft kräftig minimiert werden müssen. Insbesondere wenn es darum geht, verschiedene Brennstoffarten zum Einsatz zu bringen, zeigt es sich immer wieder, dass die Auslegung für die eine Brennstoffart, beispielsweise für Oel, und gerichtet auf Minimierung eines bestimmten Schadstoffes, beispielsweise von NOx-Emissionen, auf andere Brennstoffarten und andere Schadstoff-Emissionen nicht befriedigend übertragen werden kann. Bei mehrstufigen Brennkammern strebt man an, die zweite Stufe mager zu fahren. Dies ist indessen nur möglich, wenn am Eintritt in die zweite Stufe eine genügend hohe Temperatur vorherrscht, damit ein ausreichender Ausbrand in der zweiten Stufe auch bei geringer Brennstoffmenge erzielt werden kann, d.h., die Brennstoff/Luft-Mischung in der ersten Stufe muss weitgehend konstant gehalten werden, was beispielsweise bei einer Verbrennung mit den bekanntgewordenen Diffusionsbrennern zwar an sich möglich ist, aber mit unzulässig hohen Schadstoff-Emissionen belastet wird.

Hiergegen sind Vorschläge bekanntgeworden, welche darauf hinzielen, bei einer mehrstufigen Verbrennung eine katalytische Stufe vorzusehen. Dabei kann die katalytische Wirkung auf eine Konversion des eingesetzten Brennstoffes vor der Verbrennung gerichtet sein, beispielsweise bei einem gasförmigen Brennstoff auf einen Teilumsatz in CO2, H2O resp. in H2, CO. Bei diesem Verfahren stellen sich im Grunde genommen immer die gleichen Probleme ein, welche einerseits die Inbetriebsetzung und Betriebsfähigkeit des vorgesehenen Katalysators hinsichtlich der zum Einsatz gelangenden Brennstoffe und andererseits die anschliessende richtige Zusammensetzung eines emissionsarmen Verbrennungsgemisches betreffen.

Bekanntgeworden ist des weiteren, eine katalytische intermediäre Verbrennungsstufe vorzusehen, welche stromab einer ersten Verbrennungsstufe wirkt. Diese vorgeschaltete Verbrennungsstufe hat dabei die Aufgabe, die Bedingungen für die nachgeschaltete katalytische Verbrennung zu schaffen, wobei in dieser katalytischen Verbrennungsstufe das ganze gebildete Brennstoff/Luft-Gemisch zur Verbrennung gelangen soll. Es ist naheliegend, dass hier aufgrund der nicht zu umgehenden Temperaturschwankungen innerhalb der der katalytischen Stufe vorgeschalteten Verbrennung leicht zu einer Beschädigung oder einer thermischen Zerstörung des Katalysators kommen kann.

Auch hinsichtlich der Schadstoff-Emissionen vermögen die erwähnten Vorschläge nicht zu überzeugen: Die dem Katalysator vorgeschaltete Verbrennung produziert ihre Schadstoffe während des ganzen ihr zugedachten Betriebes, so dass stets eine sozusagen Grundlast an Schadstoff-Emissionen vorgegeben ist, die sich dann mit den übrigen aus den nachfolgenden Verbrennungen addieren, so dass eine Minimierung der Schadstoff-Emissionen schon aus diesen Grund unmöglich ist.

Ferner soll nicht verkannt werden, dass die im Katalysator stattfindende Konversion der Abgase aus der vorangehenden Verbrennung neue Schadstoffe erzeugen kann, deren schadstoffbezogene Konsequenzen, soweit ersichtlich, noch nicht in allen Details eruiert worden sind, weshalb auch diesbezüglich noch Unsicherheit vorherrscht.

Aus dem Dokument US-A-5,048,284 ist ein Verfahren zum Betrieb einer Kraftwerksanlage bekannt. Die Kraftwerksanlage besteht im wesentlichen aus mindestens einem Verdichter, mindestens einer Verbrennungseinheit und mindestens einer Turbine, wobei die Verbrennungseinheit aus einer Brennkammer und einer stromauf der Brennkammer geschalteten Aufbereitungsstufe für mindestens einen Teil der Verbrennungsluft besteht. Ein Teil verdichteter Luft strömt durch die Aufbereitungsstufe, wird mit einer Menge Brennstoff gemischt und in einem Wasserstoff-Generator fraktioniert. Anschliessend strömt die generierte Wasserstoff und die restliche verdichtete Luft in die Brennkammer.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art, im Zusammenhang mit dem Einsatz einer katalytischen Stufe, die Schadstoff-Emissionen bei der Erzeugung eines Heissgases zu minimieren.

Beim Erfindungsgegenstand liegt eine Schaltung vor, die grundsätzlich aus einer Aufbereitungsstufe für die Verbrennungsluft, welche entweder reine Luft oder ein Brennstoff/Luft-Gemisch sein kann, und einer nachgeschalteten Verbrennungsstufe besteht. Wesentlich bei dieser Schaltung sind die Vorkehrungen, welche das Fahrkonzept charakterisieren. Das Anfahren geschieht über einen Brenner, der stromab eines Katalysators wirkt und dessen maximale Temperatur beschränkt bleibt, wie weiter unten noch näher eingegangen wird. Die Last der Kraftwerksanlage wird mit diesem Anfahrbrenner bis auf ca. 20% hochgefahren. Danach wird auf eine Brennstoff zuführung umgeschaltet, welche die katalytische Stufe selbst speist; die hier stattfindende Verbrennung geschieht bei Tem-peraturen bis ca. 1000°C. Anschliessend wird eine zweite Verbrennungsstufe eingeschaltet, welche stromab des Anfahrbrenners wirkt, und in welcher die Heissgase auf Nenntemperatur aufbereitet werden. Grundsätzlich ist es so, dass der Anfahrbrenner und die zweite Stufe zur Bildung eines Gemisches direkt mit Brennstoff gespiesen werden. Für die katalytische Stufe wird, wie bereits erwähnt, eine separate Aufbereitung des Brennstoff/Luft-Gemisches vorgesehen. Zu diesem Zweck wird ein Teil verdichteter Luft aus dem Hauptstrom entnommen und zunächst vorgewärmt. Anschliessend wird diese Luft mit einem entsprechenden Anteil Brennstoff vermischt, mit oder Vorgabe, eine fette Mischung zu erzielen. Diese Mischung wird dann durch einen Generator geleitet, in welchem eine Fraktionierung in verschiedenen Gaskomponenten, so unter anderen in Wasserstoff, abläuft. Vorzugsweise wird diese Fraktionierung über einen Katalysator bewerkstelligt, wobei auch eine nicht katalytische Fraktionierung möglich ist. Anschliessend wird diese fraktionierte Verbrennungsluft stromauf der katalytischen Stufe mit der restlichen verdichteten Luft und der entsprechenden Brennstoffmenge zu einem einzigen Gemisch aufbereitet. Die katalytische Stufe tritt erst in Funktion, nachdem der Anfahrbrenner mit einem Teil verdichteter Luft und Brennstoff in Betrieb genommen wurde, und die Last der Anlage, wie oben erwähnt, bis ca. 20% hochgezogen wurde. Anschliessend wird die katalytische Stufe und die zweite Verbrennungsstufe in Betrieb genommen, womit die Anlage dann sowohl thermisch als auch lastmässig auf Nennbetrieb hochgefahren wird.

Der wesentliche Vorteil der Erfindung ist darin zu sehen, dass die katalytische Stufe nicht mit Heissgasen oder Abgasen aus einer vorangehenden Verbrennung beaufschlagt wird, und somit keine schadstoffmässige Vorbelastung erfährt. Die katalytische Stufe wird somit mit einem optimalen Gemisch betrieben, das auf die verschiedenen Betriebsparameter des in der katalytischen Stufe eingesetzten Katalysators angepasst ist. Verbrennungstechnisch sind die Heissgase aus dem Katalysator bei konstanter Temperatur sehr schadstoffarm.

Ein weiterer wesentlicher Vorteil der Erfindung betrifft den Anteil an Wasserstoff aus einem Generator in der Aufbereitungsstufe, der die Verbrennung insbesondere in der katalytischen Stufe unterstützt.

Die zweite Verbrennungsstufe wird ausschliesslich oder im wesentlichen mit den schadstoffarmen Heissgasen aus der katalytischen Verbrennung gespiesen, dergestalt, dass die anschliessende Temperaturerhöhung allein für allfällige Schadstoff-Emissionen verantwortlich ist. Selbstverständlich kann in diese zweite Verbrennungsstufe noch eine bestimmte Menge Verdichterluft eingeführt werden, welche so zu dosieren ist, dass die sich dann einstellende Flammentemperatur nicht zu einer Wirkungsgradeinbusse der Anlage führt.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnungen Ausführungsbeispiele der Erfindung näher erläutert. Alle für das unmittelbare Verständnis der Erfindung nicht erforderlichen Elemente sind fortgelassen. Gleiche Elemente sind in den verschiedenen Figuren mit den gleichen Bezugszeichen versehen. Die Strömungsrichtung der Medien ist mit Pfeilen angegeben.

### Kurze Beschreibung der Zeichnungen

Es zeigt:
- Fig. 1: eine Schaltung einer Gasturbine mit zweistufiger Verbrennung und mit einer zwischengeschalteten katalytischen Stufe,
- Fig. 2: eine Brennkammer als Bestandteil obiger Schaltung und
- Fig. 3: einen Temperatur- und Lastverlauf bei der Inbetriebsetzung der Brennkammer.

### Wege zur Ausführung der Erfindung, gewerbliche Verwendbarkeit

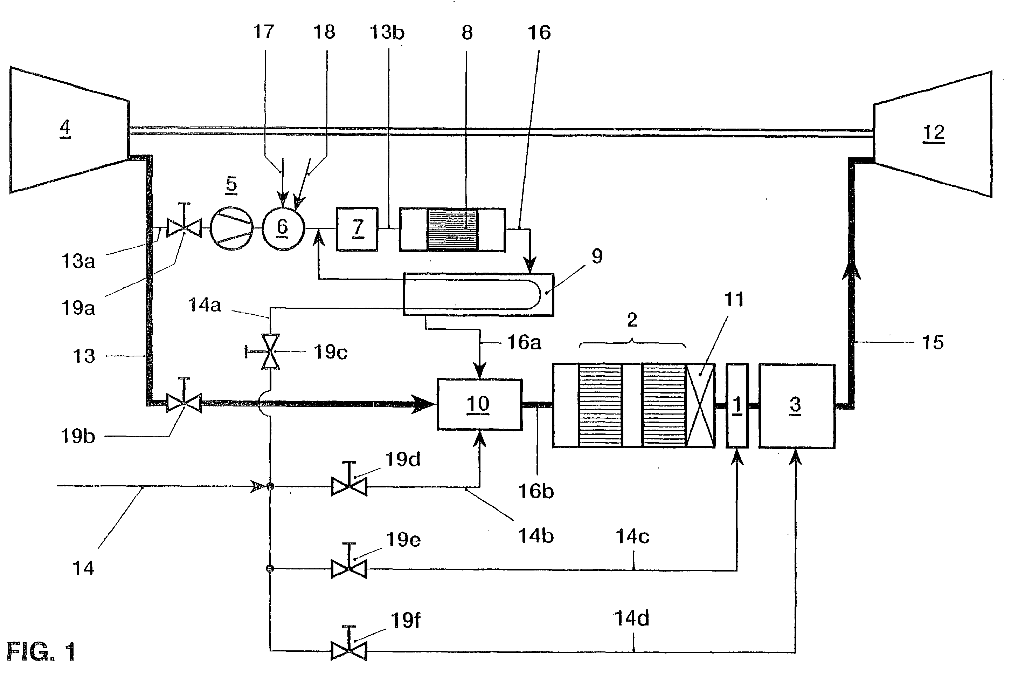

Fig. 1 zeig die Schaltung einer Gasturbine, deren Aggregate, was die Strömungsmaschinen betrifft, konventionell aufgebaut sind. Ein Verdichter 4 sorgt für die Bereitstellung einer verdichteten Luftmenge 13, welche nach Durchlauf einer kalorischen Aufbereitung als Heissgase 15 eine Turbine 12 beaufschlagen. Die Abgase aus dieser Turbine 12 können anschliessend beispielsweise dazu benutzt werden, den Betrieb eines Dampfkreislaufes als Bestandteil einer Kombianlage aufrechtzuerhalten. Stromab des Verdichters 4 wird ein Teil 13a Verdichterluft 13 abgezweigt und in einen Hilfsverdichter 5 geleitet, in welchem eine zusätzliche Kompression stattfindet. Danach strömt diese Luft in einen Wärmereaktor 6, der von einer Wärmequelle 17 gespiesen wird. Gleichzeitig wird in diesen Wärmereaktor 6 zusätzlich noch Wasser 18 eingespritzt, womit ein Luft/Dampf-Gemisch ensteht. Stromab des Wärmereaktors 6 wird diesem Gemisch eine von einer zentralen Brennstofführung 14 stammenden Brennstoffmenge 14a beigegeben, die vorgängig durch einen Wärmetauscher 9 geleitet wurde. In einem anschliessenden Mischer 7 wird ein homogenes Gemisch gebildet, wobei die dort herrschende Temperatur um die 400°C beträgt. Dieses so aufgebaute resp. zusammengesetzte Gemisch 13b wird dann in einen nachgeschalteten Wasserstoff-Generator 8 geleitet, in welchem eine Fraktioniereung des dort als Verbrennungsluft wirkenden Gemisches in mehrere Gaskomponenten, insbesondere N2, CO, H2, stattfindet. Zweck Moderierung der hier vorgegebenen Temperatur werden diese Gaskomponenten durch den bereits genannten Wärmetauscher 9 geleitet, der in wärmetauschender Weise durch den ebenfalls bereits genannten Brennstoff 14a durchströmt wird. Die so kalorisch aufbereitete und fraktionierte Verbrennungsluft 16a strömt anschliessend in einen Mischraum 10, in welchem die Hauptgemischbildung mit einer weiteren Brennstoffmenge 14b vorgenommen wird. Dieses Gemisch 16b strömt sodann durch eine katalytische Stufe 2. Stromab dieser katalytischen Stufe 2 ist ein Drallerzeuger 11 angeordnet, der stromauf eines Anfahrbrenners 1 wirkt. In Strömungsrichtung schliesst sich diesem Anfahrbrenner 1 eine zweiten Verbrennungsstufe 3 an, in welchem die endgültige Aufbereitung der Heissgase 15 stattfindet, welche anschliessend die nachgeschaltete Turbine 12 beaufschlagen. Sowohl der Anfahrbrenner 1 als auch die zweite Verbrennungsstufe 3 werden individuell durch Einbringung einer entsprechenden Brennstoffmenge 14c resp. 14d, welche ebenfalls Abzweigungen aus einer zentralen Brennstofführung sind, betrieben. Die Abgase aus dieser Turbine 12 können beispielsweise im Sinne einer sequentieller Verbrennung wieder zu Heissgasen aufbereitet werden, oder sie können, wie bereits erwähnt, in einen Dampferzeugungsprozess geleitet werden, in welchem die Bereitstellung eines Dampfes zum Betreiben einer Dampfturbine vonstatten geht. Auf den Verbrennungsprozess des Anfahrbrenners 1, der katalytischen Stufe 2 und der zweiten Verbrennungsstufe 3 sowie auf die Interdependenz zwischen den einzelnen Stufen wird unter der Beschreibung der nachfolgenden Figuren näher eingegangen. Es bleibt noch anzumerken, dass die einzelnen Abzweigungen aus der Strömung der Verdichterluft 13 und der zentralen Brennstofführung 14 durch Anordnung funktionsgerichteter Regelorgane 19a, 19b, 19c, 19d, 19e, 19f angesteuert werden.

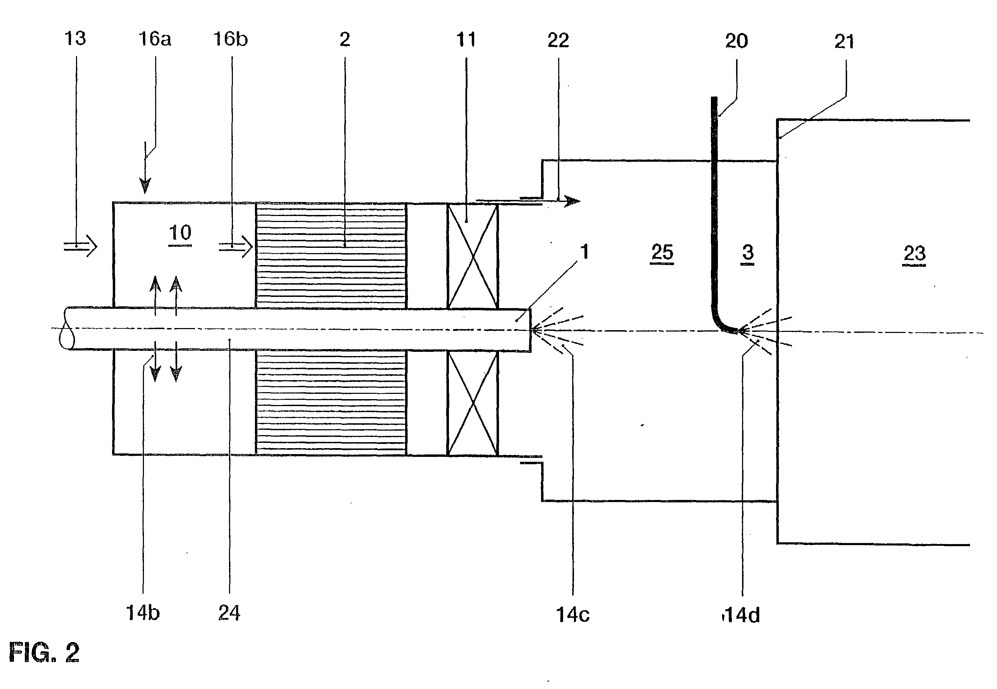

Fig. 2 zeigt eine praktische Ausbildung der einzelnen Verbrennungsstufen in Form einer zusammenhängenden Brennkammer, die entweder aus einem einzelnen Rohr besteht oder als Ringkammer ausgebildet ist. Bei einer annularen Ausbildung der Brennkammer kann diese auch aus einzelnen Rohren bestehen, welche um eine Achse angeordnet sind. Die Verdichterluft 13 strömt in einen Mischraum 10, der bereits in Fig. 1 mit der gleichen Positionierung versinnbildlicht worden ist, und welcher die Funktion erfüllt, das Brennstoff/Luft-Gemisch zum Betreiben der katalytischen Stufe 2 bereitzustellen. Zwischen Mischraum 10 und Brennraum 25 des Anfahrbrenners 1 erstreckt sich eine zentrale Brennstofflanze 24, welche einerseits die Brennstoffzuführung 14b für die Gesamt-Verbrennungsluft 13 und 16a zur katalytischen Stufe 2 und andererseits diejenige 14c zum Betreiben des Anfahrbrenners 1 übernimmt. Zum weiteren Betreiben dieses Anfahrbrenners 1 wird vorzugsweise ein direkter Weg zur Einbringung der benötigten Luft vorgesehen. Diese Beistellung kann ebenfalls über die zentrale Brennstofflanze 24 oder über Eindüsungsöffnungen 22 von aussen in die Brennzone 25 des Anfahrbrenners 1 erfolgen. Stromab des Mischraumes 10 wirkt die katalytische Stufe 2, deren Verbrennung aufgrund der dort vorgesehen katalytischen Beschichtung sowie der vorgesehenen Stufen erfolgt. Die einzelnen Katalysatorstufen, welche die katalytische Stufe 2 bilden, sind hinsichtlich des Durchflusses entsprechend ausgebildet und mit unterschiedlichen katalytischen Werkstoffen beschichtet, dergestalt, dass eine optimale Oxidation und/oder Konversion des eingesetzten Brennstoffes resultiert. Danebst soll eine gezielte Auslegung sicherstellen, dass auch hinsichtlich der in der katalytischen Stufe 2 resultierenden Spitzen- und Endtemperaturen bestimmte Grenzen nicht überschritten werden. Vorzugsweise soll die Zunahme der Temperatur über die verschiedenen Stufen innerhalb der katalytischen Stufe 2 sukzessiv zunehmen, wobei von Stufe zu Stufe gezielt auf die verschiedenen Gaskomponenten der Verbrennungsluft bei deren exotherme Reaktion mit dem entsprechenden katalytischen Werkstoff eingegangen werden soll. Der finale Zweck dieser Vorkehrungen ist darin zu sehen, dass einerseits eine Minimierung der Schadstoff-Emissionen angestrebt wird, andererseits soll ein kalorisch gleichmässiges Heissgas aus dieser katalytischen Stufe 2 erzeugt werden, das in der nachgeschalteten zweiten Verbrennungsstufe 3 vorzugsweise eine brennerlose Verbrennung ermöglicht, d.h., durch eine dort eingedüste Brennstoffmenge 14d soll die Verbrennung durch Selbstzündung erfolgen. Zu diesem Zweck ist es dann lediglich nur noch erforderlich, dass am Umfang der Brennzone 25 radial angeordnete Brennstofflanzen 20 für die Einbringung des entsprechenden Brennstoffes 14d vorgesehen werden. Je nach Brennstoffzusammensetzung wird die dafür erforderliche Temperatur ca. 800°C und mehr betragen. Da die Last der Anlage über den Anfahrbrenner 1 bis auf lediglich ca. 20% hochgefahren wird, muss die restliche Verbrennungsluftmenge zwangsläufig über die katalytische Stufe 2 geleitet werden. Stromab dieser Stufe greift sodann, wie bereits erwähnt, der Drallerzeuger 11 ein, der jene Wirbelströmung iniziert, die die Gemischbildung und Verbrennung in der zweiten Verbrennungsstufe 3 nach optimalen Kriterien induziert, dies im Hinblick auf ein engbegrenztes Temperaturniveau zur Sicherstellung einer Minimierung der Schadstoff-Emissionen und Maximierung des Wirkungsgrades aus der Verbrennung. Stromab der radial angeordneten Brennstofflanzen 20 zur Einbringung jenes Brennstoffes 14d, der die Selbstzündung auslöst, erfolgt gegenüber der vorangehenden Brennzone 25 eine Vergrösserung des Durchflussquerschnittes des nachfolgenden Brennraumes 23 anhand eines Querschnittssprunges 21. In dieser Ebene bildet sich eine Rückströmzone, welche die Flammenfront in diesem Bereich stabilisiert, dergestalt, dass eine Rückzündung stromaufwärts ausgeschlossen bleibt, womit diese Rückströmzone die Eigenschaften eines körperlosen Flammenhalters entfaltet.

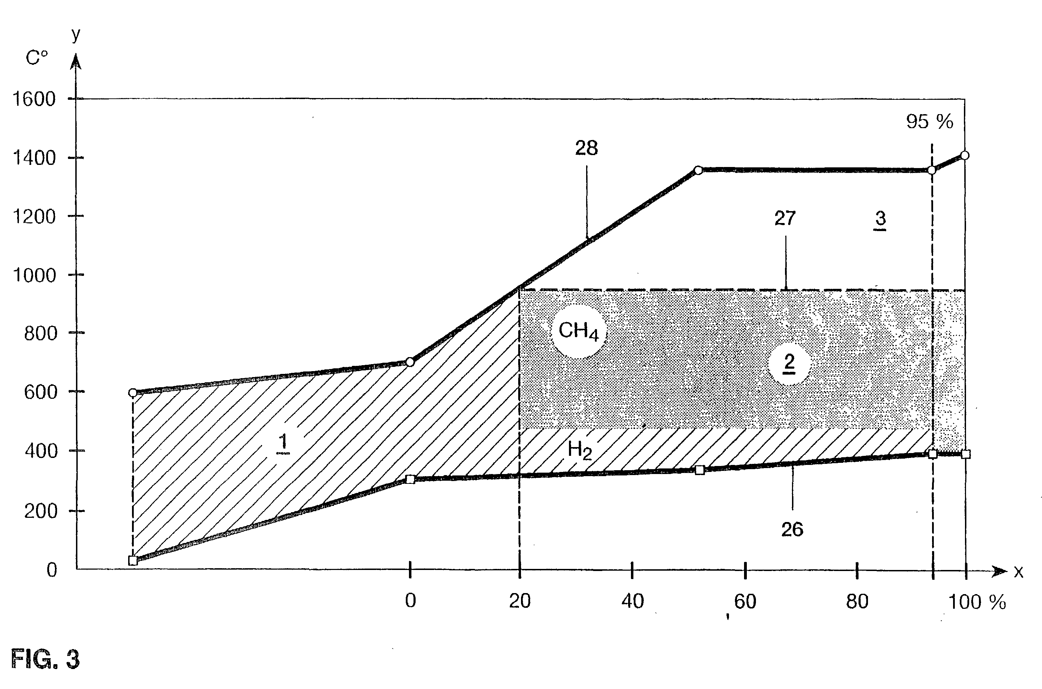

Fig. 3 zeigt den Verlauf der Lastzunahme X in Abhängigkeit zum Verlauf der Temperatur Y bei den verschiedenen Aggregaten, welche die Brennkammer bilden. Die Kurve 26 stellt den Temperaturverlauf ab Inbetriebnahme des Anfahrbrenners 1 dar. Bei Last Null beträgt die Verbrennungslufttemperatur für den Anfahrbrenner 1 ca. 300°C. Durch den Einsatz des Anfahrbrenners 1 steigert sich die aus dieser Verbrennung resultierenden Temperatur bis auf ca. 950°C, was einer Last von ca. 20% entspricht. Der Anfahrbrenner 1 kann dann ab 20% Last ausgeschaltet werden, da die katalytische Stufe 2 mit Unterstützung der H2-Menge aus dem Generator 8 ab diesem Punkt autonom die Verbrennungsluft auf 950°C aufheizen kann. Aus dieser Figur ist ersichtlich, dass die gemäss Fig. 1 erläuterte Bildung eines Wasserstoffanteils eine Unterstützung des verbrennungstechnischen Betriebes der katalytischen Stufe 2 bildet, deren Betrieb sonst weitgehend durch CH4 aufrechterhalten wird. Die Temperatur am Austritt dieser katalytischen Stufe 2 bleibt auf dem vorgenannten Niveau von ca. 950°C bestehen, wie der Verlauf der Kurve 27 zeigt. Die anschliessende zweite Verbrennungsstufe 3 steigert die Heissgastemperatur auf Nennwert unter gleichzeitiger Steigerung der Last, wie aus dem Verlauf der Kurve 28 hervorgeht. Ab 95% Last findet die letzte Temperaturangleichung nach oben statt, wobei bei 95% Last kann die Verdichter-Austrittstemperatur hoch genug sein, um bei Vollast auf die Hilfebeistellung des Generators 8 verzichten zu können. Wie aus der Figur des weiteren ersichtlich ist, besteht zwischen den drei Verbrennungsstufen eine Interdependenz, die auf Minimierung der Schadstoff-Emissionen und Maximierung des Wirkungsgrades der Anlage ausgelegt ist.

### Bezugszeichenliste

- 1: Anfahrbrenner
- 2: Katalytische Stufe
- 3: Zweite Verbrennungsstufe
- 4: Verdichter
- 5: Hilfsverdichter
- 6: Wärmereaktor
- 7: Mischer
- 8: Wasserstoff-Generator
- 9: Wärmetauscher
- 10: Mischraum
- 11: Drallerzeuger
- 12: Turbine
- 13: Verdichtete Luft
- 13a: Teilmenge von 13
- 13b: Gemisch
- 14: Zentrale Brennstoffzuführung
- 14a: Teilmenge von 14, Strömung über 9 in 13a
- 14b: Teilmenge von 14, Strömung in 10
- 14c: Teilmenge von 14, Strömung in 1
- 14d: Teilmenge von 14, Strömung in 3
- 15: Heissgase
- 16: Fraktionierte Verbrennungsluft
- 16a: Vorerwärmte, fraktionierte Verbrennungsluft
- 16b: Gemisch
- 17: Wärmequelle
- 18: Wasser
- 19a-f: Regelorgane
- 20: Radiale Brennstofflanzen
- 21: Querschnittssprung
- 22: Lufteindüsungsöffnungen
- 23: Brennraum
- 24: Zentrale Brennstofflanze
- 25: Brennzone des Anfahrbrenners 1
- 26: Verlauf der Temperatur des Anfahrbrenners 1
- 27: Verlauf der Temperatur am Austritt der kat. Stufe 2
- 28: Verlauf der Temp. in der zweiten Verbrennungsstufe 3
- X: Verlauf der Last der Anlage
- Y: Verlauf der Temperatur der Anlage

## Patentansprüche

1. Verfahren zum Betrieb einer Kraftwerksanlage, im wesentlichen bestehend aus mindestens einem Verdichter, mindestens einer Verbrennungseinheit und mindestens einer Turbine, wobei die Verbrennungseinheit aus einer Brennkammer und einer stromauf der Brennkammer geschalteten Aufbereitungsstufe für mindestens einen Teil der Verbrennungsluft besteht, wobei ein Teil (13a) verdichteter Luft (13) durch die Aufbereitungsstufe strömt, mit einer Menge Brennstoff (14a) gemischt und in einem Wasserstoff-Generator (8) fraktioniert wird, und anschliessend in die Brennkammer strömt, und wobei die restliche verdichtete Luft (13) ebenfalls in die Brennkammer strömt,
**dadurch gekennzeichnet, dass**
die fraktionierte Verbrennungsluft (16a) aus dem Wasserstoff-Generator (8) mit der restlichen verdichteten Luft (13) in einem Mischraum (10) vermischt wird und mit einem Teil des gebildeten Gemisches ein zur Brennkammer gehöriger Anfahrbrenner (1) und mit einem anderen Teil des gebildeten Gemisches in Wirkverbindung mit der fraktionierten Verbrennungsluft (16a) aus der Aufbereitungsstufe eine stromauf des Anfahrbrenners (1) wirkende und ebenfalls zur Brennkammer gehörige katalytische Stufe (2) betrieben wird, und **dass** die über die katalytische Stufe (2) und über den Anfahrbrenner (1) kalorisch aufbereitete Gesamtverbrennungsluft in eine nachgeschaltete zweite Verbrennungsstufe (3) strömt, in welcher eine weitere Verbrennung zur Erzeugung von Heissgasen (15) durchgeführt wird.

2. Verfahren nach Anspruch 1,
**dadurch gekennzeichnet, dass**
die fraktionierte Verbrennungsluft (16a) mindestens einen Anteil Wasserstoff enthält, der mindestens zur Betreibung der katalytischen Stufe (2) eingesetzt wird.

3. Verfahren nach Anspruch 1,
**dadurch gekennzeichnet, dass**
in die zweite Verbrennungsstufe (3) eine dergestalt kalorisch aufbereitete Verbrennungsluft einströmt, bei welcher durch Eindüsung eines Brennstoffes (14d) eine Selbstzündung ausgelöst wird.

## Claims

1. Method of operating a power station installation, essentially comprising at least one compressor, at least one combustion unit and at least one turbine, the combustion unit comprising a combustion chamber and a conditioning stage, connected upstream of the combustion chamber, for at least part of the combustion air, a portion (13a) of the compressed air (13) flowing through the conditioning stage, being mixed with a quantity of fuel (14a) and being fractionated in a hydrogen generator (8), and then flows into the combustion chamber, and the remaining compressed air (13) likewise flowing into the combustion chamber, **characterized in that** the fractionated combustion air (16a) from the hydrogen generator (8) is mixed with the remainder of the compressed air (13) in a mixing space (10) a start-up burner (1) belonging to the combustion chamber is operated on an individual basis using part of the mixture formed, and a catalytic stage (2) acting upstream of the start-up burner (1) and likewise belonging to the combustion chamber is operated with another part of the mixture formed in conjunction with the fractionated combustion air (16a) from the conditioning stage, and **in that** the total combustion air thermally conditioned by means of the catalytic stage (2) and the start-up burner (1) flows into a downstream second combustion stage (3), in which a further combustion is carried out to generate hot gases (15).

2. Method according to Claim 1, **characterized in that** the fractionated combustion air (16a) contains at least a proportion of hydrogen, which is used at least to operate the catalytic stage (2).

3. Method according to Claim 1, **characterized in that** the combustion air which flows into the second combustion stage (2) has been thermally conditioned to such an extent that spontaneous ignition is triggered by injection of a fuel (14d).

## Revendications

1. Procédé permettant d'exploiter une station génératrice, composée essentiellement d'au moins un compresseur, d'au moins une unité de combustion et d'au moins une turbine, l'unité de combustion se composant d'une chambre de combustion et d'un étage de traitement inséré en amont de la chambre de combustion pour au moins une partie de l'air de combustion, une partie (13a) de l'air comprimé (13) passant à travers l'étage de traitement, étant mélangée avec une quantité de combustible (14a) et fractionnée dans un générateur d'hydrogène (8), et se répandant ensuite dans la chambre de combustion et l'air comprimé (13) restant se répandant également dans la chambre de combustion,
**caractérisé en ce que**
l'air de combustion fractionné (16a) provenant du générateur d'hydrogène (8) est mélangé avec l'air comprimé (13) restant dans une chambre de mélange (10) et un brûleur de démarrage (1) appartenant à la chambre de combustion est exploité avec une partie du mélange formé, et un étage catalytique (2) appartenant également à la chambre de combustion et agissant en amont du brûleur de démarrage (1) est exploité avec une autre partie du mélange formé en relation active avec l'air de combustion fractionné (16a) provenant de l'étage de traitement, et **en ce que** l'air de combustion total traité de façon calorifique par l'intermédiaire de l'étage catalytique (2) et par l'intermédiaire du brûleur de démarrage (1) se répand dans un deuxième étage de combustion (3) placé en aval dans lequel une autre combustion est effectuée pour produire des gaz chauds (15).

2. Procédé selon la revendication 1,
**caractérisé en ce que**
l'air de combustion fractionné (16a) contient au moins un pourcentage d'hydrogène qui est utilisé au moins pour l'exploitation de l'étage catalytique (2).

3. Procédé selon la revendication 1,
**caractérisé en ce que**
dans le deuxième étage de combustion (3), un air de combustion traité de façon calorifique de telle sorte que l'injection d'un combustible (14d) déclenche une inflammation spontanée se répand.
